Europäisches Patentamt

European Patent Office

Office européen des brevets

(19)

(11) Numéro de publication: **0 199 613
B1**

(12) **FASCICULE DE BREVET EUROPEEN**

(45) Date de publication du fascicule du brevet:
03.01.90

(51) Int. Cl.⁴: **H02P 8/00**

(21) Numéro de dépôt: 86400556.6

(22) Date de dépôt: 17.03.86

(54) Procédé et dispositif pour commander l'accélération d'un moteur électrique pas à pas.

(30) Priorité: 25.03.85 FR 8504373

(43) Date de publication de la demande:
29.10.86 Bulletin 86/44

(45) Mention de la délivrance du brevet:
03.01.90 Bulletin 90/1

(84) Etats contractants désignés:
CH DE GB IT LI NL

(56) Documents cités:
EP-A- 0 116 677
DE-A- 3 327 906
FR-A- 2 512 604

IEEE 1982 IECON
PROCEEDINS, 15-19 novembre 1982, Palo Alto, CA,
pages 84-89, IEEE, New York, US; M.F. RAHMAN et al.:
"Acceleration - deceleration of V.R. type steppers and
their high performance control strategies on a
microprocessor based CNC controller" 000
Elektronik vol.31 (1982), N 16, München, W. KUNTZ :
Mehrachsige, schnelle Schrittmotorsteuerung mit
beliebigen Frequenz-Zeit-Profil, (pages 35-38)

Le dossier contient des informations techniques
présentées postérieurement au dépôt de la demande et
ne figurant pas dans le présent fascicule.

(73) Titulaire: CENTRE TECHNIQUE DES INDUSTRIES
MECANIQUES, 52, avenue Félix-Louat B.P. 67,
F-60304 Senlis Cédex(FR)

(72) Inventeur: Auger, Marc, 18 Hameau des Champs,
F-95670 Marly La Ville(FR)

(74) Mandataire: Levy, David et al, c/o S.A.
Fedit-Loriot 38, avenue Hoche, F-75008 Paris(FR)

ACTORUM AG

EP 0 199 613 B1

**Description**

La caractérisque propre du moteur électrique pas à pas est d'effectuer une rotation d'angle bien précise, en valeur angulaire et en sens, représentant une fraction de tour ou pas, sous l'action d'une impulsion de commande.

Par exemple une rotation complète nécessitant 200 impulsions donnera un pas de 1,8°, le nombre de pas par tour dépendant du nombre de phases du moteur, de sa disposition constructive et de la séquence des commutations des différentes phases.

Les impulsions sont fournies au système de pilotage des bobines du moteur sous la forme d'un signal "fréquence" dont la fréquence définit la vitesse de rotation en pas par secondes. Un signal "sens" fixe la commutation des phases et donc, le sens de rotation du moteur.

Lorsqu'on veut faire démarrer le moteur à partir d'une vitesse initiale nulle, si la fréquence de commande au démarrage est trop grande, le moteur peut démarrer avec perte de pas ou même ne pas démarrer du tout. Pour cette raison, on définit une fréquence maximale de démarrage dite fréquence de marche-arrêt ou fréquence de "start-stop".

La fréquence de marche-arrêt est donc la fréquence maximale autorisant démarrages et arrêts sans perte de pas. Cette fréquence est fonction du moteur lui-même, mais aussi de l'inertie, du couple résistant et des frottements. Elle est donc étroitement liée à chaque cas d'utilisation.

Les moteurs pas à pas connaissent des applications de plus en plus étendues, par exemple dans les domaines de la machine-outil, la robotique, les imprimantes, les appareils à dessiner, les traceurs X-Y, les appareils de précision pour analyse ou contrôle.

Pour beaucoup de ces applications, on désire maintenant faire effectuer pour le moteur pas à pas un déplacement donné dans le temps le plus court possible. C'est pourquoi, si on avait pû se contenter jusqu'à présent, pour certaines applications, de faire fonctionner le moteur pas à pas à vitesse constante, c'est-à-dire juste en dessous de la vitesse de marche-arrêt définie ci-dessus (qui est en général très inférieure à 1000 pas/seconde, par exemple de l'ordre de 300 pas/seconde dans un cas donné), on cherche maintenant, après le démarrage, à accélérer le moteur au-delà de cette vitesse de marche-arrêt.

Bien entendu, une vitesse de rotation supérieure à la vitesse de marche-arrêt ne peut être obtenue, après le démarrage, que moyennant un contrôle de l'accélération angulaire du moteur afin d'éviter une perte de synchronisme. A chaque instant, l'accélération angulaire maximale que l'on peut donner au moteur est liée au couple moteur, au couple résistant et à l'inertie ramenée sur l'arbre.

On a donc cherché à réaliser des systèmes de commande capables de faire effectuer automatiquement par le moteur un déplacement donné, sur un nombre N de pas, en un temps minimum.

Une telle commande doit se décomposer en trois temps :

a) démarrage à une vitesse inférieure à la vitesse de marche-arrêt, puis accélération contrôlée jusqu'à la vitesse maximale,
b) fonctionnement à vitesse maximale,
c) décélération contrôlée jusqu'à une vitesse inférieure à celle de marche-arrêt, puis arrêt.

La rotation à des vitesses supérieures à la vitesse de marche-arrêt permet de réduire considérablement les temps de positionnement d'un mécanisme, notamment pour les longs déplacements. En effet, la vitesse maximale peut être de l'ordre de 10 à 20 fois plus grande que la vitesse de marche-arrêt, par exemple 6.000 à 7.000 pas/seconde.

Dans les systèmes de commande connus jusqu'à présent, la loi de montée en vitesse, depuis la vitesse de départ Vo jusqu'à la vitesse maximale Vm, est le plus souvent linéaire pour simplifier la commande. Mais il est bien évident qu'une telle loi n'est pas optimale vis-à-vis des caractéristiques du moteur, notamment de la courbe du Couple en fonction de la vitesse, et ne permet pas de réduire au mieux le temps nécessaire à un déplacement donné.

Il a été proposé également d'utiliser des lois de montée en vitesse à allure sensiblement parabolique ou exponentielle, par segments successifs. Mais, dans tous les cas, les paramètres de la loi de montée en vitesse (vitesse de départ, vitesse maximale, temps de montée en vitesse) sont difficilement programmables en fonction des conditions particulières rencontrées, si bien que, en général, on choisit une valeur fixe pour ces paramètres et on introduit dans une mémoire morte du système de commande un programme figé d'accélération et de décélération. En effet, la programmation nécessite très souvent des calculs préalables et les paramètres programmés ne sont pas indépendants entre eux. Enfin, la programmation fait très souvent appel à d'autres paramètres directement liés au principe utilisé, mais ne caractérisant pas directement le mouvement à exécuter.

Une commande d'accélération de moteur pas à pas, par segments successifs ou paliers, a été décrite dans le document Elektronik Vol 31 (1982) n° 16 (München, RFA) N. KUNTZ: "Mehrachsige, schnelle Schrittmotorsteuerung mit beliebigem Frequenz-Zeit-Profil" (pages 35–38). Selon ce document, le nombre de pas dans un "palier" est constant, mais, comme la fréquence des pas change d'un palier à l'autre, la durée d'un palier est variable, cette durée se réduisant au fur et à mesure de l'accélération, c'est-à-dire lorsqu'on atteint des fréquences de pas élevées.

2

Il en résulte qu'on doit avoir recours, selon ce document, à un microordinateur relativement puissant, à 16 bits, pour éliminer les problèmes de temps de traitement pour les fréquences de pas élevées.

Il a été proposé également, par exemple dans le brevet FR 2 512 604, de réaliser un dispositif de commande de vitesse, pour moteur pas à pas, d'un deuxième type dit "en boucle fermée". Mais, dans ce cas, il est nécessaire de prévoir un organe détecteur produisant des impulsions de synchronisation représentatives de l'avance par incrément du moteur pas à pas.

La présente invention a pour but de remédier aux inconvénients des systèmes connus du premier type, notamment de celui décrit dans le document "Elektronik" cité ci-dessus, en permettant de n'avoir recours qu'à un micro-processeur de faible puissance, et aux inconvénients des systèmes connus du deuxième type, notamment de celui décrit dans le brevet FR 2 512 604, en évitant d'avoir recours à un dispositif détecteur produisant des impulsions de synchronisation.

L'invention permet d'imposer au moteur une courbe d'accélération (et de décélération) d'allure exponentielle à exposant négatif qui, comme on le verra plus loin, est la courbe la plus favorable dans le cas d'un moteur pas à pas, et il permet de traiter de façon simple les différents paramètres variables à introduire, ce traitement pouvant être effectué par un simple micro-processeur de faible puissance, par exemple un modèle courant à 8 bits.

Suivant l'invention, on divise le temps d'accélération (ou de décélération) en un certain nombre de "paliers" de durée égale $\Delta t$ et on augmente (dans le cas de l'accélération) la fréquence des pas d'un palier à l'autre. Donc le nombre des pas dans chaque palier augmente d'un palier à l'autre, la durée $\Delta t$ des paliers restant la même de bout en bout de l'accélération.

On élimine ainsi les problèmes de temps de traitement pour les fréquences de pas élevées.

Dans le procédé suivant l'invention, le microprocesseur effectue, avant chaque démarrage du moteur, le précalcul de la vitesse optimale V pour chaque fraction successive $\Delta t$ du temps d'accélération, les valeurs successives de V étant stockées dans une mémoire RAM dans un ordre donné pour y être lues dans cet ordre pendant la période d'accélération, puis dans l'ordre inverse pendant la décélération.

Le dispositif suivant l'invention comprend, en plus des organes classiques dans les systèmes de commande connus, un premier compteur qui délivre la fréquence de commande au moteur et un deuxième compteur qui délivre un signal de période $\Delta t$, la valeur de rechargement du premier compteur étant réactualisée par la valeur suivante de la vitesse stockée en RAM à chaque débordement du deuxième compteur, c'est à dire tous les $\Delta t$.

L'invention sera mieux comprise à l'aide des dessins annexés et de la description qui suit. Sur ces dessins :

- la figure 1 illustre les trois phases de fonctionnement d'un moteur avec accélération, palier et décélération.
- la figure 2 est la courbe du couple d'un moteur pas à pas en fonction de la vitesse.
- la figure 3 représente la courbe de montée en vitesse optimale.
- la figure 4 montre l'allure de la vitesse au cours d'un déplacement complet.
- la figure 5 montre l'allure de la vitesse dans le cas où la vitesse maximale $V_m$ n'a pas le temps d'être atteinte.
- la figure 6 est une comparaison des courbes V = f(t) dans le cas de la montée linéaire et de la montée exponentielle.
- la figure 7 illustre l'approche de la courbe exponentielle optimale pour une série de "marches d'escalier".
- les figures 8 et 9 montrent la symétrie temporelle effectuée autour du temps médian de fonctionnement td/2,respectivement dans le cas où la vitesse maximale $V_m$ peut être atteinte et dans le cas où elle ne peut pas être atteinte.
- la figure 10 est un schéma des différents éléments d'un générateur d'accélération suivant l'invention.
- la figure 11 est une représentation des signaux à la sortie des premier et deuxième compteurs.

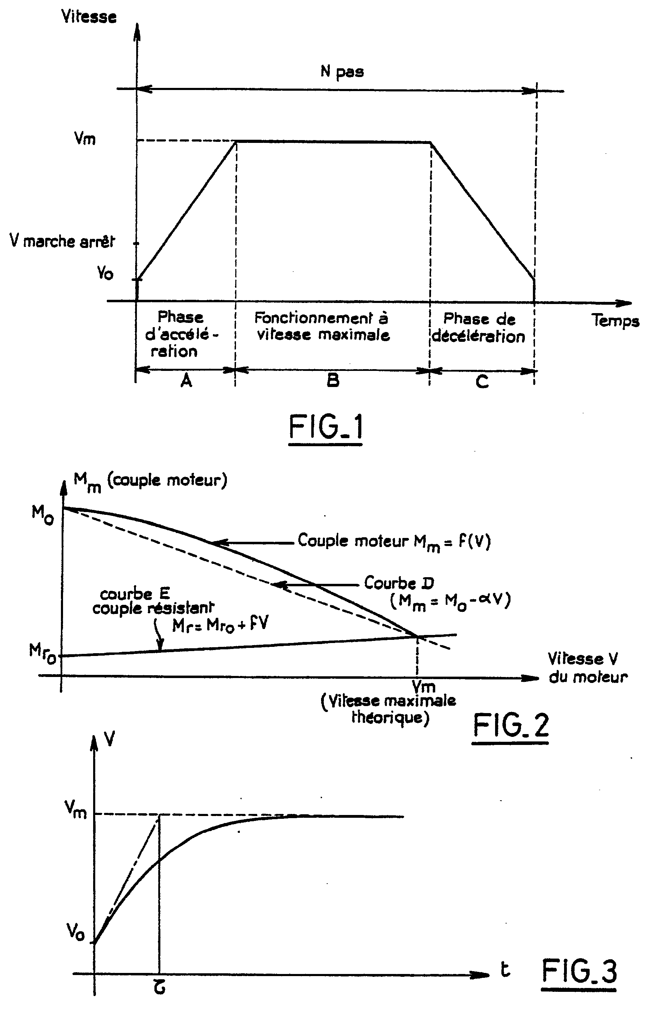

On a représenté sur la figure 1, par une courbe de vitesse en fonction du temps, les trois phases de fonctionnement d'un moteur pas à pas, pour un déplacement correspondant à N pas.

La phase A est la phase de départ et d'accélération, le démarrage étant fait à une vitesse Vo inférieure à la vitesse de marche-arrêt.

La phase B est la phase de fonctionnement en palier à la vitesse maximale possible Vm; la phase C est la phase de décélération et d'arrêt, symétrique de la phase A. Pour simplifier la figure 1, on a représenté simplement la loi de montée en vitesse sous la forme linéaire qui n'est pas la plus favorable.

En effet, le couple fourni par un moteur pas à pas décroît avec la vitesse selon une courbe dont l'allure est donnée par la courbe en traits pleins de la figure 2 et qui peut être assimilée à une droite D (en traits interrompus sur la figure 2) d'équation $M_m = M_o - \alpha V$ dans laquelle $\underline{M_m}$ est le couple moteur à la vitesse $\underline{V}$, $\underline{M_o}$ est le couple au démarrage et $\alpha$ est la pente de la droite D.

On peut alors déterminer l'allure idéale de la montée en vitesse permettant d'appliquer au moteur la vitesse maximale à chaque instant de la phase d'accélération. Cette montée en vitesse est de forme exponentielle à exposant négatif, dans laquelle la vitesse V en fonction du temps est : $V = V_m (1 - e^{-t/\zeta})$.

$\zeta$ est la constante de temps de la montée en vitesse, qui dépend : de l'inertie maximale de l'ensemble moteur/charge; de la pente $\alpha$ de la courbe D (fig. 2); du couple moteur Mo pour V = 0; du couple résistant Mro pour V = o; (fig. 2) ramené sur l'arbre du moteur; de la pente f de la courbe E (coefficient de frottement visqueux).

Le moteur démarrant directement à une vitesse Vo inférieure ou égale à la vitesse de marche-arrêt, la courbe de montée prend donc l'expression suivante:

$$V = Vo + (Vm - Vo) (1 - e^{-t/\zeta})$$

qui est représenté sur la figure 3.

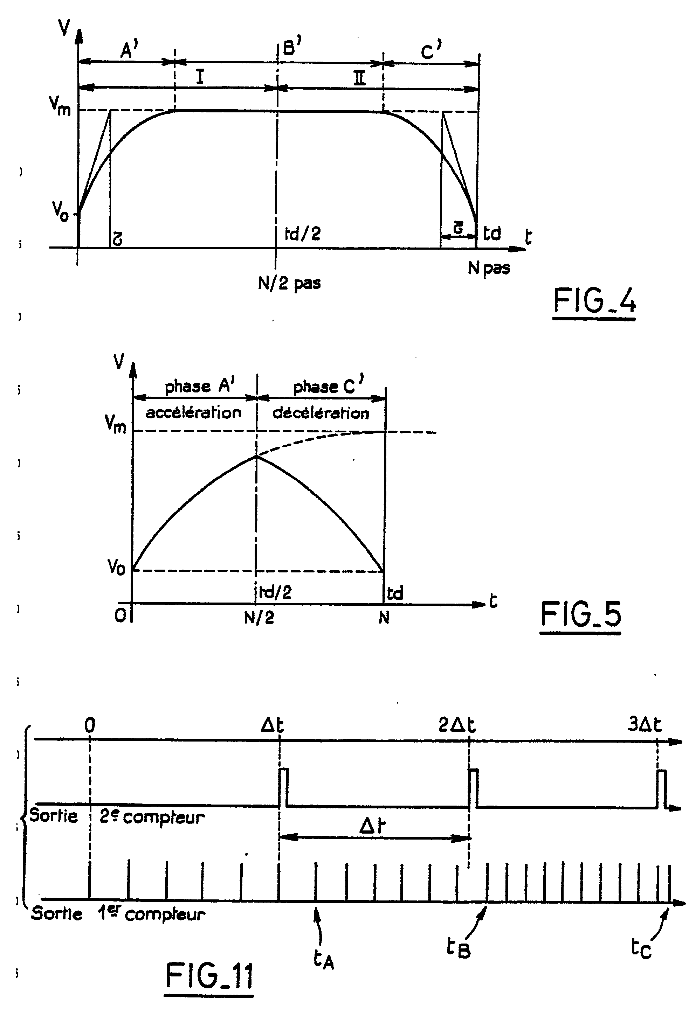

Pour un déplacement complet (rotation sur N pas), la courbe des vitesses en fonction du temps est représentée sur la figure 4 où on retrouve les trois phases de fonctionnement (A' : démarrage et accélération; B' : palier à la vitesse maximale Vm; C' décélération et arrêt), analogues aux trois phases A, B, C de la figure 1. Il est à noter que la courbe est symètrique par rapport au temps td/2 (correspondant à N/2 pas), td étant la durée totale du mouvement.

Au cas où le nombre de pas N est insuffisant pour que la vitesse maximale Vm soit atteinte, la courbe V = f (t) aura l'allure représentée sur la figure 5.

La loi de montée en vitesse de forme exponentielle à exposant négatif, qui a été définie ci-dessus et qui compense la diminution du couple des moteurs pas à pas en fonction de la vitesse, est la forme la plus favorable pour réaliser un déplacement donné dans un temps minimal.

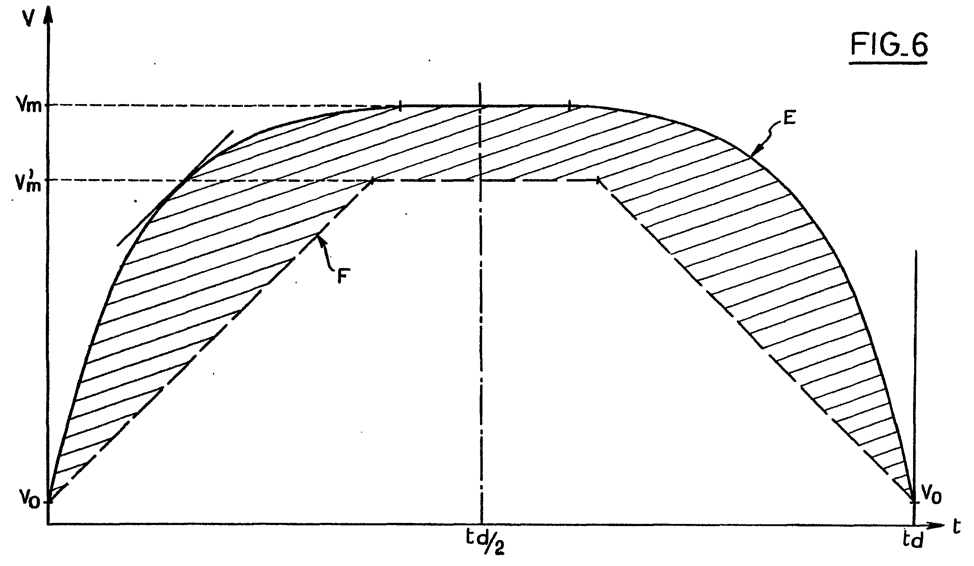

Ceci est clairement illustré par la figure 6 qui montre (courbe E en traits plein) l'allure de la vitesse, analogue à la figure 4, pour un déplacement de durée $t_d$ et qui montre (courbe F en traits interrompus) l'allure de la vitesse (analogue à la figure 1) avec une loi d'accélération et de décélération linéaire pendant le même temps $t_d$.

Il ressort clairement de cette figure 6 que, pendant les phases d'accélération et de décélération, la vitesse est toujours supérieure dans le cas de la courbe E et que, d'autre part, la vitesse maximale Vm ne peut pas être atteinte avec la courbe F, la vitesse de palier étant limitée à une valeur V'm bien inférieure à Vm. Il en résulte que, pendant un même temps $t_d$, le nombre de pas effectués par le moteur commandé selon la courbe E est bien supérieur au nombre de pas effectués par le moteur commandé selon la courbe F (la différence pouvant être illustrée par la surface de la zone hachurée comprise entre les deux courbes). Si, dans un but de simplification, les courbes E et F ont été représentées pour un même temps de fonctionnement $t_d$, il est bien évident que, pour accomplir un même nombre $\underline{N}$ de pas, la durée sera beaucoup plus courte selon la courbe E que selon la courbe F. Le gain sur le temps de déplacement peut être de l'ordre de 30 à 50 % suivant l'invention.

Pour faire calculer la courbe de fonctionnement au microprocesseur, on définit deux phasesde fonctionnement autour de td/2, c'est-à-dire autour de N/2 (figure 4).

Phase I : accélération
Phase II : décélération

Ces deux phases correspondant aux phases A' et C' sur la figure 5.

La phase II étant symétrique de la phase I par rapport au point médian du mouvement, il suffit de définir l'algorithme de calcul de la loi de montée en vitesse en phase I.

- dans la Phase I : $V = Vo + (Vm - Vo)(1 - c^{-t/\zeta}$ on montre que :

$$\frac{dV}{dt} = \frac{Vm - V}{\zeta} \implies \boxed{\Delta V = \frac{\Delta t}{\zeta} (Vm - V)} \qquad (1)$$

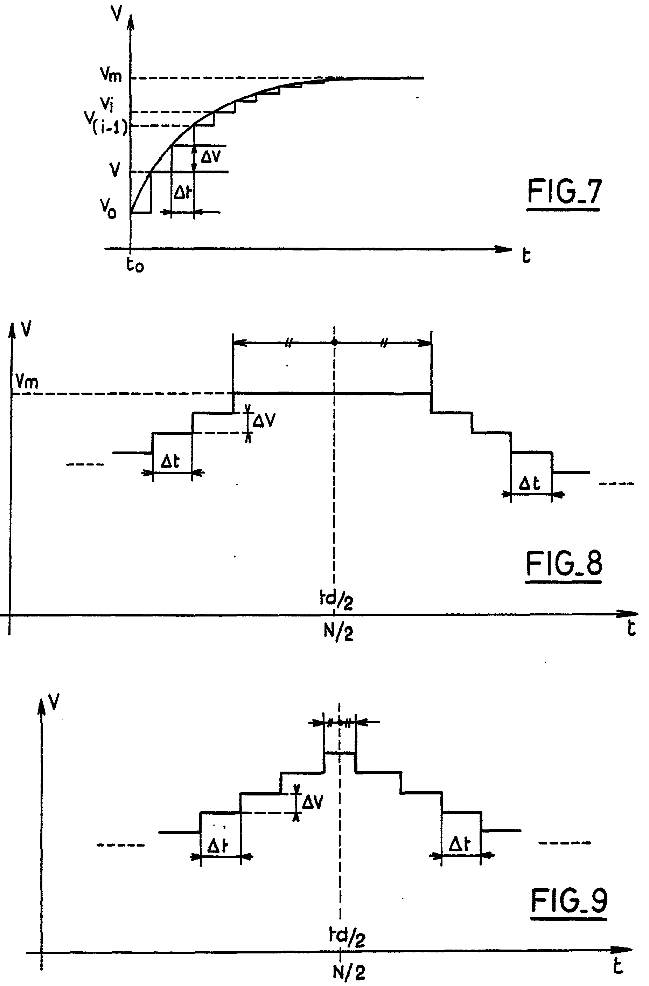

Si l'on approche la courbe V = f(t) par une série de marches d'escalier de largeur $\Delta t$, comme il est représenté sur la figure 7 qui illustre l'expression (1) ci-dessus, le calcul de l'exponentielle se réduit à un calcul d'écarts $\Delta V$ utilisant de simples opérations arithmétiques. Ce calcul peut encore être réduit si $\Delta t$ est choisi tel que :

$$\Delta t = \frac{\zeta}{2^k}$$

Alors,

$$\Delta V = \frac{Vm - V}{2^k}$$

4

L'approche de la courbe théorique est d'autant plus fine que k est grand.
Soit $V_{(i-1)}$ la vitesse à l'instant

$$t_{(i-1)} = to + \sum_{n=i}^{n=i-1} \Delta tn$$

et soit Vi la vitesse à l'instant

$$ti = to + \sum_{n=1}^{n=i} \Delta tn$$

$$Vi = V_{(i-1)} + \Delta Vi$$

avec

$$\Delta Vi = \frac{Vm - Vi}{2^k}$$

D'autre part, le microprocesseur va effecteur un symétrie temporelle autour du point médian du mouvement, comme il est illustré par la figure 8, dans le cas où la vitesse maximale Vm est atteinte (cas des figures 4 et 6), et par la figure 9 dans le cas où la vitesse maximale Vm n'a pas le temps d'être atteinte (cas de la figure 5).

Il est clair que, grâce à l'algorithme ci-dessus n'utilisant que de simples opérations arithmétiques (addition, soustraction, décalage), très facilement et rapidement réalisables, un microprocesseur simple permet de calculer, pour chaque $\Delta t$ la nouvelle vitesse Vi procurant l'accélération angulaire maximale que l'on peut donner au moteur à l'instant considéré, c'est-à-dire une accélération exponentielle, ce qui est l'idéal pour un moteur pas à pas.

Vues la simplicité et la rapidité du calcul, on peut choisir une finesse relativement grande des temps élémentaires $\Delta t$, par exemple environ 1/50e à 1/500e du temps d'accélération, ce qui donne une très bonne approche de la courbe idéale.

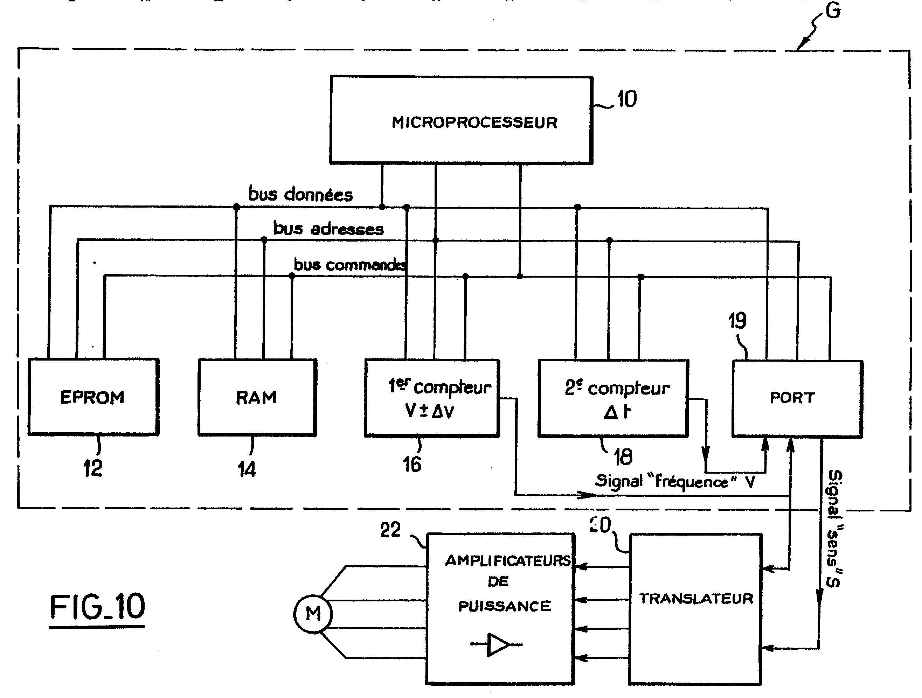

Le générateur à accélération programmable G suivant l'invention comporte un microprocesseur 10 (figure 10), pouvant être un modèle simple à 8 bits courant ou même un "microcontroleur" 8 bits, une mémoire non volatile 12 contenant le programme de calcul et une mémoire RAM 14 contenant les données temporaires et les consignes.

Les seuls paramètres à introduire par l'utilisateur sont, pour un mécanisme donné :

Vo = vitesse de départ

Vm = vitesse maximale (ou de palier)

$\zeta$ = constante de temps de la montée en vitesse plus, bien entendu, pour chaque déplacement, le paramètre N = nombre de pas total à effectuer, et S = sens du mouvement.

Le générateur G comprend également un premier compteur à rechargement automatique 16 qui délivre, pendant chaque période de temps $\Delta t$, la fréquence des commandes calculée V du moteur à ce moment (par exemple depuis 300 pas/seconde pour Vo, jusqu'à 5.000 ou 7.000 pas/seconde pour Vm); ainsi qu'un deuxième compteur à rechargement automatique 18 qui délivre le signal de période $\Delta t$, constant sur toute l'accélération. Les signaux délivrés par les deux compteurs sont illustrés par la figure 11 qui montre l'augmentation de la fréquence du signal fréquence à chaque $\Delta t$.

La valeur de rechargement du premier compteur est modifiée d'une valeur $\Delta V$ à chaque débordement du deuxième compteur, donc tous les $\Delta t$.

Le signal "fréquence" V, définissant la vitesse de rotation du moteur en pas/seconde et le signal "sens" S, issu du port 19 déterminant le sens de rotation du moteur sont transmis à un circuit translateur 20 qui génère la séquence des commutations des différentes phases en fonction du sens de rotation désiré et de la commutation précédente, ainsi qu'il est usuel pour la commande des moteurs pas à pas, les impulsions étant appliquées à un amplificateur de puissance 22 qui alimente le moteur M.

Le microprocesseur 10 effectue le comptage des impulsions délivrées au translateur 20, la détermination de la zone ou du point de fonctionnement sur la courbe (accélération, palier, point médian du mouvement, décélération, arrêt), ainsi que les chargements du premier compteur 16 à la nouvelle valeur V±$\Delta$V tous les$\Delta$t.

Il est à noter, comme on l'a représenté par les temps $t_A$, $t_B$, $t_C$ sur le graphique de la sortie des signaux du deuxième compteur à la figure 11, que les modifications de la vitesse, pour passer d'une vitesse V à la vitesse immédiatement supérieure V + $\Delta$V, n'inter viennent que sur un nombre entier de périodes du signal vitesse, c'est-à-dire à la première impulsion à la nouvelle fréquence apparaissant après le signal correspondant $\Delta$t de changement de fréquence.

Dans le cas du générateur d'accélération suivant l'invention, avec lequel on désire pouvoir obtenir les vitesses maximales autorisées par la courbe exponentielle, l'exécution en temps réel du calcul des valeurs de chargement du premier compteur 16 empêcherait d'atteindre ces vitesses maximales. En effet, à tout moment, le temps d'exécution entre deux pas doit être inférieur à la période du signal "fréquence".

C'est pourquoi, suivant l'invention, les différentes valeurs de vitesse utilisée au cours de la phase d'accélération sont précalculées (à partir de l'algorythme décrit ci-dessus) avant le début du mouvement, puis rangée dans un tableau en zone RAM. Ensuite, en phase d'accélération, le microprocesseur n'a plus qu'à venir lire successivement chaque valeur dans le tableau. En phase de décélération, la lecture du tableau se fait en sens inverse.

Donc, chaque fois que l'on change l'un au moins des deux paramètres Vo et Vm, le microprocesseur 10 effectue avant le début de chaque mouvement, le précalcul des différentes valeurs de vitesse utilisées au cours de la phase d'accélération. Grâce à l'algorithme décrit ci-dessus, n'utilisant que de simples opérations arithmétiques, ce précalcul peut être effectué en un temps très court, inférieur à 10 ms, par exemple 8 ms, avec un microprocesseur peu coûteux, de faible puissance. Ce court délai de retard peut même autoriser le précalcul systématique, avant le début de chaque mouvement, et est largement rattrapé grâce au fait que l'accélération (et la décélération) sont réalisées suivant la courbe optimale possible et grâce au fait que la marche en palier (lorsqu'elle existe) s'effectue à la vitesse maximale possible. Le gain de temps, pour un déplacement donné et pour un mécanisme donné, peut être, avec le générateur suivant l'invention, de 30 à 50 % par rapport aux systèmes d'accélération connus utilisant une courbe d'accélération linéaire et/ou effectuant en temps réel le calcul des différentes valeurs de vitesse.

Bien entendu, l'invention n'est pas limitée aux caractéristiques qui ont été plus particulièrement décrites dans ce qui précède. C'est ainsi que, bien qu'une courbe d'accélération de forme exponentielle à exposant négatif soit la plus favorable depuis Vo jusqu'à Vm, on peut sans sortir du cadre de l'invention, utiliser une telle courbe seulement dans une partie de la phase d'accélération, particulièrement la partie finale de cette phase, ce qui permet d'atteindre les vitesses les plus élevées sans risque de décrochage du moteur.

De même une courbe différente de la courbe exponentielle idéale peut être utilisée (par exemple portion de sinusoïde ou d'hyperbole ) du moment que , au moins dans la partie finale de la phase d'accélération, chaque accroissement de vitesse$\Delta$Vn soit plus petit que l'accroissement$\Delta$Vn-1 correspondant à l'intervalle de temps $\Delta$tn-1 précédent.

Enfin, si le précalcul de toutes les valeurs de vitesse V+$\Delta$V peut être effectué avant chaque départ du moteur, il peut être avantageux de n'effectuer ce précalcul avant le départ du moteur, que dans le cas où un au moins des paramètres caractérisant la courbe V=f(t) a changé. S'il n'y a pas de changement de ces paramètres, on utilise directement les valeurs déjà stockées dans le mémoire, ce qui économise le temps de précalcul.

**Revendications**

1. Procédé pour commander l'accélération d'un moteur électrique pas à pas entre une vitesse de départ Vo et une valeur maximale Vm, par accroissements incrémentiels $\Delta$V de la vitesse de commande du moteur, consistant:
- à diviser le temps d'accélération en un certain nombre de périodes de temps$\Delta$t égales représentant chacune une fraction de ce temps d'accélération;
- à calculer, d'avance, au moyen d'un microprocesseur, toutes les valeurs de vitesse V + $\Delta$V correspondant à chaque période$\Delta$t, la fonction V = f(t) étant une fonction telle que, sur au moins la partie finale du temps d'accélération, chaque accroissement$\Delta$Vn est plus petit que l'accroissement$\Delta$Vn-1 de rang précédent;
- à mettre en mémoire les valeurs ainsi précalculées;
- à produire un signal de période $\Delta$t qui est appliqué au microprocesseur pour lui faire lire successivement, à chaque intervalle$\Delta$t, les valeurs V + $\Delta$V précalculées rangées dans la mémoire;
- et à transmettre au système de pilotage des bobines du moteur, sous la forme d'un signal fréquence, lesdites valeurs V + $\Delta$V pendant chaque période $\Delta$t.

2. Procédé suivant la revendication 1 caractérisé en ce que le précalcul est effectué par le microprocesseur et les valeurs précalculées sont mises en mémoire après chaque changement d'au moins un paramètre caractérisant la forme de la courbe V = f(t) et avant le départ du moteur.

3. - Procédé suivant l'une des revendications 1 ou 2, caractérisé en ce que la fonction V=f(t) est une fonction exponentielle à exposant négatif.

4. - Procédé suivant la revendication 3, caractérisé en ce que le microprocesseur calcule chaque accroissement de vitesse ΔV, par rapport à la vitesse précédente V, à partir de la formule

$$\frac{Vm - V}{2^k},$$

dans laquelle $\underline{k}$ est un coefficient fixé qui détermine la fraction du temps d'accélération représentée par Δt.

5. - Procédé suivant l'une des revendications 1 à 4, caractérisé en ce que la période Δt correspond à une fraction choisie entre 1/50$^e$ et 1/500$^e$ du temps d'accélération.

6. - Procédé suivant l'une des revendications 1 à 5, caractérisé en ce que le nombre des périodes Δt dans le temps d'accélération est choisi de façon que le précalcul puisse être effectué par le microprocesseur en un temps de l'ordre de 10ms.

7. - Procédé suivant l'une des revendications précédentes, pour commander, l'accélération puis la décélération d'un moteur, caractérisé en ce que, pendant la période de décélération, les valeurs V + ΔV précalculées et rangées dans la mémoire sont lues dans l'ordre inverse de la lecture effectuée pendant la période d'accélération.

8. - Générateur à accélération programmable pour commander la vitesse d'un moteur électrique pas à pas qui comprend des moyens de calcul programmables à microprocesseur (10-12-14) pour générer un signal V, permettant de piloter des moyens de commutation et d'amplification (20-22) commandant l'avance par incréments dudit moteur, et pour modifier périodiquement suivant une période Δt, la fréquence dudit signal V d'une valeurΔV, et où la suite des valeurs que peut prendre la fréquence dudit signal V est précalculée par les moyens (10-12) suivant une courbe de variation V = f(t); où lesdites valeurs précalculées sont stockées dans une mémoire RAM (14) dans un ordre donné, et où ledit générateur comprend un premier compteur (16) délivrant aux moyens (22) la fréquence de commande V, ainsi qu'un deuxième compteur (18) délivrant un signal de périodeΔt, la valeur de rechargement du premier compteur étant modifiée à chaque débordement du deuxième compteur au bout d'une période Δt, la suite des valeurs que peut prendre la fréquence dudit signal V étant lue dans la mémoire (14) dans l'ordre précité, pendant la phase d'accélération, et étant lue dans l'ordre inverse, pendant la phase de décélération.

9. - Générateur suivant la revendication 8, caractérisé en ce que le microprocesseur effectue un nouveau précalcul des valeurs V, avant le démarrage du moteur, si l'un au moins des paramètres définissant la courbe V = f(t) a changé.

10. - Générateur suivant l'une des revendications 8 ou 9, caractérisé en ce la suite des valeurs que peut prendre la fréquence du signal V est telle que l'écart de fréquence ΔV entre deux valeurs de fréquence consécutives est décroissant au cours de la phase d'accélération et croissant au cours de la phase de décélération.

11. - Générateur suivant la revendication 10, caractérisé en ce que la suite des valeurs que peut prendre la fréquence du signal V est telle que l'écart ΔV entre deux valeurs de fréquence consécutives est proportionnelle à l'écart entre la fréquence maximale désirée Vm et la fréquence V la plus faible desdites fréquences consécutives.

12. - Générateur suivant l'une des revendications 8 à 11 caractérisé en ce qu'au moins les paramètres comprenant : le nombre de pas total à effectuer N; la vitesse de départ Vo; la vitesse maximale Vm et le temps de montée en vitesse sont fixés par l'utilisateur et introduits dans les moyens de calcul (10-12-14).

13.- Générateur suivant l'une des revendications 8 à 12, caractérisé en ce que chaque changement de fréquence du signal V n'intervient que sur un nombre entier de périodes dudit signal.

## Claims

1. A method for controlling the acceleration of an electric stepping motor between a starting speed Vo and a maximum value Vm in incremental increases ΔV of the motor speed, said method consisting:
   – in dividing the acceleration time into a predetermined number of equal periods Δt each representing a fraction of said acceleration time;
   – in computing beforehand by means of a microprocessor all the speed values V + ΔV corresponding to each period Δt, the function V = f(t) being a function such that each increase ΔVn is smaller than the increase ΔVn–1 of the preceding rank in at least the final portion of the acceleration time;
   – in storing in memory the values which have thus been precomputed;
   – in producing a signal having a period Δt which is applied to the microprocessor so that the precomputed values V + ΔV stored in memory should be read successively by said microprocessor at each interval Δt;
   – and, during each period Δt, in transmitting said values V + ΔV in the form of a frequency signal to the system for controlling the motor windings.

2. A method in accordance with claim 1, characterized in that precomputation is performed by the microprocessor and the precomputed values are stored in memory after each change of at least one parameter which characterizes the shape of the curve V = f(t) and prior to starting of the motor.

3. A method in accordance with claim 1 or claim 2, characterized in that the function V = f(t) is an exponential function with a negative exponent.

4. A method in accordance with claim 3, characterized in that the microprocessor computes each speed increase $\Delta V$ with respect to the preceding speed V on the basis of the formula

$$\frac{Vm - V}{2^k} ,$$

where $\underline{k}$ is a fixed coefficient which determines the fraction of the acceleration time represented by $\Delta t$.

5. A method in accordance with any one of claims 1 to 4, characterized in that the period $\Delta t$ corresponds to a fraction chosen between 1/50 and 1/500 of the acceleration time.

6. A method in accordance with any one of claims 1 to 5, characterized in that the number of periods $\Delta t$ in the acceleration time is chosen so as to ensure that precomputation can be performed by the microprocessor in a time interval of the order of 10 ms.

7. A method in accordance with any one of the preceding claims for controlling acceleration and then deceleration of a motor, characterized in that, during the deceleration period, the precomputed values V + $\Delta V$ stored in memory are read in the reverse order with respect to the reading operation performed during the acceleration period.

8. A programmable acceleration generator for controlling the speed of an electric stepping motor which comprises programmable microprocessor computation means (10–12–14) for generating a signal V which serves to control switching and amplifying means (20–22) for producing angular movements of said motor in incremental steps and for periodically changing the frequency of said signal V by a value $\Delta V$ to a period $\Delta t$, wherein the series of values which can be assumed by the frequency of said signal V is precomputed by the microprocessor means (10–12) in accordance with a curve of variation V = f(t); wherein precomputed values are stored in a RAM memory (14) in a given order and wherein said generator comprises a first counter (16) for delivering the control frequency V to the switching and power-amplifying means (22) aforesaid as well as a second counter (18) for delivering a signal having a period $\Delta t$, the reloading value of the first counter being modified at each overflow of the second counter at the end of a period $\Delta t$, the series of values which can be assumed by the frequency of said signal V being read from the memory (14) in the order aforesaid during the acceleration stage and being read in the reserve order during the deceleration stage.

9. A generator in accordance with claim 8, characterized in that the microprocessor performs a further precomputation of the values V prior to starting of the motor if at least one of the parameters defining the curve V = f(t) has changed.

10. A generator in accordance with claim 8 or claim 9, characterized in that the series of values which can be assumed by the frequency of the signal V is such that the difference in frequency $\Delta V$ between two consecutive frequency values decreases during the acceleration stage and increases during the deceleration stage.

11. A generator in accordance with claim 10, characterized in that the series of values which can be assumed by the frequency of the signal V is such that the difference $\Delta V$ between two consecutive frequency values is proportional to the difference between the desired maximum frequency Vm and the lowest frequency V of said consecutive frequencies.

12. A generator in accordance with any one of claims 8 to 11, characterized in that at least the parameters comprising the total number N of steps to be performed, the starting speed Vo, the maximum speed Vm and the time-duration of speed increase are determined by the user and introduced into the computing means (10–12–14).

13. A generator in accordance with any one of claims 8 to 12, characterized in that each change in frequency of the signal V takes place only in a whole number of periods of said signal.

## Patentansprüche

1. Verfahren zur Regelung der Beschleunigung eines elektrischen Schrittmotors zwischen einer Anfangsgeschwindigkeit Vo und einer Maximalgeschwindigkeit Vm durch inkrementelle Erhöhungen $\Delta V$ der Antriebsgeschwindigkeit des Motors, mit folgenden Verfahrensschritten:

Teilen der Beschleunigungszeit in eine bestimmte Anzahl von gleichen Zeitperioden $\Delta t$, von denen jede einen Bruchteil dieser Beschleunigungszeit darstellt,

Vorausberechnen aller den einzelnen Perioden $\Delta t$ entsprechenden Geschwindigkeitswerte V + $\Delta V$ mit Hilfe eines Mikroprozessors, wobei die Funktion V = f(t) eine solche ist, bei der zumindest im Endbereich der Beschleunigungszeit jede Erhöhung $\Delta Vn$ kleiner ist als die Erhöhung $\Delta Vn-1$ des in der Reihenfolge voranstehenden Werts,

Speichern der so vorausberechneten Werte,

Erzeugen eines Signals mit der Periode $\Delta t$, das dem Mikroprozessor zugeführt wird und diesen veranlaßt, bei jedem Intervall $\Delta t$ die vorausberechneten und gespeicherten Werte $V + \Delta V$ nacheinander auszulesen, und

während jeder Periode $\Delta t$ Übertragen der Werte $V + \Delta V$ in Form eines Frequenzsignals zu dem System zur Steuerung der Motorspulen.

2. Verfahren nach Anspruch 1, dadurch gekennzeichnet, daß die Vorausberechnung von dem Mikroprozessor durchgeführt wird und daß die vorausberechneten Werte nach jeder Änderung wenigstens eines der die Form der Kurve $V = f(t)$ charakterisierenden Parameter und vor dem Anlaufen gespeichert werden.

3. Verfahren nach einem der Ansprüche 1 oder 2, dadurch gekennzeichnet, daß die Funktion $V = f(t)$ eine Exponentialfunktion mit negativem Exponenten ist.

4. Verfahren nach Anspruch 3, dadurch gekennzeichnet, daß der Mikroprozessor jeden Geschwindigkeitszuwachs $\Delta V$ relativ zu der vorangehenden Geschwindigkeit $V$ aus der Formel $(Vm - V)/2^k$ berechnet, in der $k$ ein Koeffizient ist, der den durch $\Delta t$ repräsentierten Bruchteil der Beschleunigungszeit bestimmt.

5. Verfahren nach einem der Ansprüche 1 bis 4, dadurch gekennzeichnet, daß die Periode $\Delta t$ einem zwischen 1/50 und 1/500 der Beschleunigungszeit liegenden Bruchteil entspricht.

6. Verfahren nach einem der Ansprüche 1 bis 5, dadurch gekennzeichnet, daß die Anzahl der Perioden $\Delta t$ in der Beschleunigungszeit so gewählt ist, daß die Vorausberechnung von dem Mikroprozessor in einer Zeit der Größenordnung 10 ms durchführbar ist.

7. Verfahren nach einem der vorhergehenden Ansprüche zur Regelung der Beschleunigung und sodann der Verzögerung eines Motors, dadurch gekennzeichnet, daß während der Verzögerungsperiode die vorausberechneten und in dem Speicher geordneten Werte $V + \Delta V$ in einer Reihenfolge ausgelesen werden, die gegenüber der Reihenfolge beim Auslesen während der Beschleunigungsperiode umgekehrt ist.

8. Generator mit programmierbarer Beschleunigung zur Regelung der Geschwindigkeit eines elektrischen Schrittmotors

mit einer einen Mikroprozessor enthaltenden programmierbaren Recheneinrichtung (10–12–14) zur Erzeugung eines die Regelung der Umschalte- und Verstärkungsmittel (20–22) für die Steuerung des inkrementellen Vorwärtslaufs des Motors erlaubenden Signals $V$ und zur periodischen Änderung der Frequenz dieses Signals $V$ um einen Wert $\Delta V$ mit einer Periode $\Delta t$,

wobei die Folge der Werte, die die Frequenz des genannten Signals $V$ annehmen kann, von der Recheneinrichtung (10–12) nach einer Änderungskurve $V = f(t)$ vorausberechnet wird und diese vorausberechneten Werte in einer vorgegebenen Reihenfolge in einem RAM-Speicher (14) gespeichert werden,

wobei der Generator einen ersten Zähler (16) aufweist, der den genannten Mitteln (22) die Steuerfrequenz $V$ liefert, sowie einen zweiten Zähler (17), der ein Signal der Periode $\Delta t$ liefert, wobei der Neuladewert des ersten Zählers bei jedem Überlauf des zweiten Zählers am Ende einer Periode $\Delta t$ geändert wird,

und wobei die Folge der Werte, die die Frequenz des Signals $V$ annehmen kann, während der Beschleunigungsphase in der vorgenannten Reihenfolge in den Speicher (14) gelesen wird und während der Verzögerungsphase in entgegengesetzter Reihenfolge gelesen wird.

9. Generator nach Anspruch 8, dadurch gekennzeichnet, daß der Mikroprozessor vor dem Starten des Motors eine neue Vorausberechnung der Werte $V$ ausführt, wenn sich wenigstens einer der die Kurve $V = f(t)$ bestimmenden Parameter geändert hat.

10. Generator nach einem der Ansprüche 8 oder 9, dadurch gekennzeichnet, daß die Folge der Werte, die die Frequenz des Signals $V$ annehmen kann, so beschaffen ist, daß der Frequenzabstand $\Delta V$ zwischen zwei aufeinanderfolgenden Frequenzwerten im Verlauf der Beschleunigungsphase kleiner wird und im Verlauf der Verzögerungsphase größer wird.

11. Generator nach Anspruch 10, dadurch gekennzeichnet, daß die Folge der Werte, die die Frequenz des Signals $V$ annehmen kann, so beschaffen ist, daß der Abstand $\Delta V$ zwischen zwei aufeinanderfolgenden Frequenzwerten dem Abstand zwischen dem gewünschten Maximalfrequenz $Vm$ und der niedrigsten Frequenz $V$ der aufeinanderfolgenden Frequenzen proportional ist.

12. Generator nach einem der Ansprüche 8 bis 11, dadurch gekennzeichnet, daß zumindest die Parameter, die die Gesamtzahl $N$ der auszuführenden Schritte, die Anfangsgeschwindigkeit $Vo$, die Maximalgeschwindigkeit $Vm$ und die Geschwindigkeits-Anstiegszeit beinhalten, von dem Benutzer festgelegt und in die Recheneinrichtung (10–12–14) eingegeben werden.

13. Generator nach einem der Ansprüche 8 bis 12, dadurch gekennzeichnet, daß jede Frequenzänderung des Signals $V$ nur auf eine ganze Zahl von Perioden des genannten Signals einwirkt.

FIG_1

FIG_2

FIG_3

FIG_4

FIG_5

FIG_11

FIG.6

EP 0 199 613 B1

FIG. 7

FIG. 8

FIG. 9

FIG.10

MICROPROCESSEUR — 10

bus données

bus adresses

bus commandes

EPROM

RAM

1er compteur
V ± ΔV

2e compteur
Δt

PORT

12

14

16

18

19

Signal "fréquence" V

Signal "sens" S

22

20

AMPLIFICATEURS
DE
PUISSANCE

TRANSLATEUR

M

G

EP 0 199 613 B1